(19) Europäisches Patentamt
European Patent Office
Office européen des brevets

(11) **EP 2 098 922 B1**

(12) **FASCICULE DE BREVET EUROPEEN**

(45) Date de publication et mention
de la délivrance du brevet:
**13.10.2010 Bulletin 2010/41**

(51) Int Cl.:
***G05B 13/02*** *(2006.01)*

(21) Numéro de dépôt: **09153782.9**

(22) Date de dépôt: **26.02.2009**

(54) **Dispositif de contrôle d'un système régulé et moteur incorportant un tel dispositif**

Regelungsvorrichtung und Motor mit dieser Vorrichtung

Control apparatus and motor incorporating such apparatus

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **07.03.2008 FR 0851485**

(43) Date de publication de la demande:
**09.09.2009 Bulletin 2009/37**

(73) Titulaire: **SNECMA**
**75015 Paris (FR)**

(72) Inventeur: **Le Gonidec, Serge**
**27200 Vernon (FR)**

(74) Mandataire: **Delumeau, François Guy et al**
**Cabinet Beau de Loménie**
**158, rue de l'Université**
**75340 Paris Cedex 07 (FR)**

(56) Documents cités:
**EP-A- 1 188 640       US-A- 3 201 675**
**US-A- 4 280 083       US-A- 4 801 857**
**US-B2- 6 810 843      US-B2- 7 174 714**

**Description**

Arrière-plan de l'invention

L'invention se situe dans le domaine du contrôle du fonctionnement d'un système complexe.

Elle s'applique de façon privilégiée mais non limitative au contrôle d'un moteur.

D'une façon générale, les systèmes complexes régulés répondent à des consignes extérieures, la loi de régulation ajustant des variables de fonctionnement internes qui tendent à conduire et maintenir le système au point de fonctionnement conforme aux consignes.

Par exemple, dans le cas d'un moteur, une consigne croissante de poussée a pour premier effet d'augmenter la variable représentative de la pression dans la chambre de combustion du moteur.

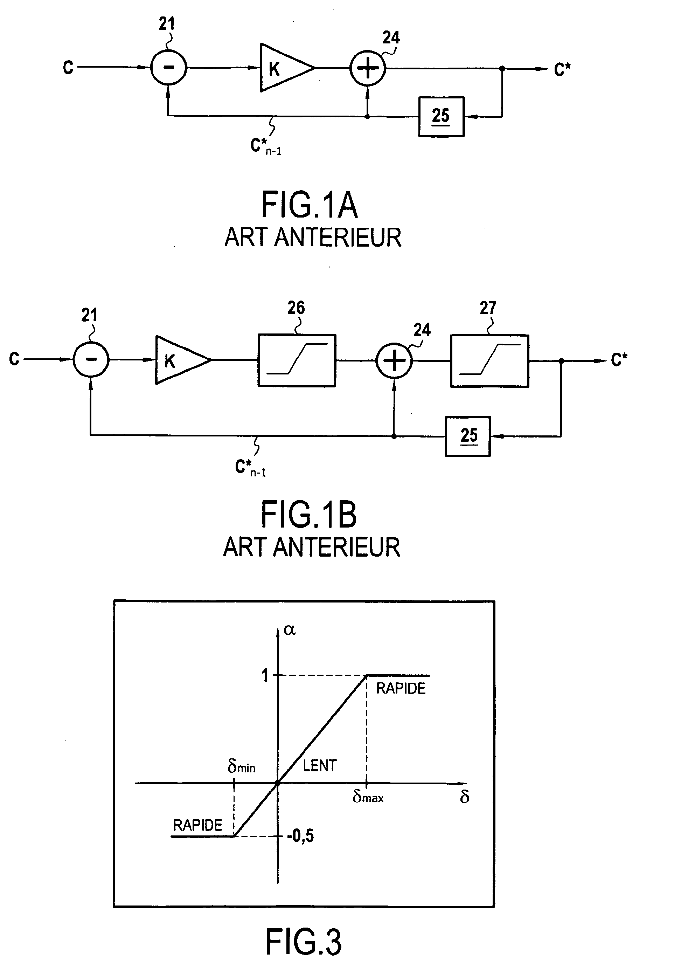

Pour la régulation d'un système complexe, il est connu d'utiliser une consigne filtrée par un filtre du premier ordre, comme représenté à la figure 1A.

Dans cet exemple, la consigne filtrée C\* est obtenue à partir de la consigne C par l'équation (1) ci-dessous, dans laquelle le gain K représente la dynamique du filtre et $C^*_{n-1}$ une valeur précédente de la consigne filtrée :

$$C^* = K \times (C - C^*_{n-1}) + C^*_{n-1}. \quad (1)$$

A la figure 1A, les références 21, 24 et 25 désignent respectivement : un soustracteur, un additionneur, un retardateur connus de l'homme du métier.

Par ailleurs, les systèmes complexes comportent le plus souvent des sous-systèmes dont des paramètres internes doivent être maintenus inférieurs à une limite fonctionnelle, et ceci qu'elle que soit le régime souhaité de fonctionnement du système.

Par exemple, dans un moteur, la vitesse de rotation d'une turbine ne doit jamais dépasser une valeur limite prédéterminée.

Il peut donc se produire des conflits entre le besoin de respecter les limites de fonctionnement du sous-système et l'objectif de répondre aux consignes.

Ces conflits peuvent notamment être dus à une mauvaise connaissance des domaines d'utilisation lors de la conception du système, ou à une dérive dans le temps de certaines caractéristiques système.

Pour tenter de palier ce problème, l'art antérieur propose des systèmes, tels que celui représenté à la figure 1B, dans lequel on utilise un saturateur 26 pour limiter la vitesse des changements des points de fonctionnement et un saturateur 27 pour en limiter l'amplitude.

Une saturation SAT sur la vitesse d'évolution des consignes est appliquée sur le paramètre $K \times (C - C^*_{n-1})$, la valeur de la consigne filtrée C\* étant obtenue par l'équation (2) ci-dessous :

$$C^* = SAT (K \times (C - C^*_{n-1})) + C^*_{n-1}. \quad (2)$$

Un second saturateur de l'amplitude d'évolution des consignes peut aussi être utilisé, la valeur de la consigne filtrée C\* étant alors obtenue par l'équation (3) :

$$C^* = SAT (SAT (K \times (C - C^*_{n-1})) + C^*_{n-1}). \quad (3)$$

Mais cette solution n'est pas satisfaisante, car si elle permet de freiner le changement des points de fonctionnement pour tendre à la consigne, et de limiter la consigne, elle ne garantit aucunement que les paramètres critiques des sous-systèmes sont maintenus dans leurs limites fonctionnelles.

On connaît également, par le document US 4,280,083, un système d'asservissement comportant des moyens pour éviter une accélération trop élevée d'une partie mobile, même lorsqu'un signal d'entrée anormal lui est appliqué.

Objet et résumé de l'invention

L'invention propose un dispositif de contrôle d'un système régulé permettant de tendre vers le point de consigne souhaité tout en privilégiant le respect des limites fonctionnelles de paramètres internes à ce système.

**EP 2 098 922 B1**

Plus précisément, l'invention concerne un dispositif de contrôle d'au moins une variable V de fonctionnement d'un système régulé, ce dispositif comportant:

- un module de filtrage d'au moins une consigne fournie en entrée du dispositif de contrôle, ce module de filtrage utilisant un intégrateur du premier ordre ;
- un module de correction de la variable V par asservissement, ce module de correction prenant en compte une mesure de cette variable V et la consigne C* filtrée par le module de filtrage pour générer au moins une commande U du système ;
- un module de contrôle apte à générer un facteur $\alpha$ de contrôle de gain à partir d'au moins un paramètre P du système et d'une valeur $LF_P$ de limite fonctionnelle associée à ce paramètre P ; et
- des moyens pour pondérer le gain K du module de filtrage en fonction du facteur $\alpha$ et du résidu $\epsilon$ entre ladite consigne C et sa valeur filtrée C*.

D'une façon générale, le gain du module de filtrage, autrement dit la dynamique du filtre, est ajusté de sorte que le paramètre précité respecte sa limite fonctionnelle.
Conformément à l'invention cette contrainte est prioritaire au respect de la consigne.
Dans un mode particulier de réalisation de l'invention, le module de contrôle obtient le facteur de contrôle de gain $\alpha$ par une relation du type $\alpha = f(\delta)$, où $\delta$ est la différence entre le paramètre P et sa limite fonctionnelle $LF_P$, et f une fonction affine saturée.
L'homme du métier comprendra que la bande passante normale du filtre est obtenue lorsque $\alpha = 1$.
De façon avantageuse, le facteur de contrôle de gain $\alpha$ peut prendre des valeurs négatives, celles-ci définissant la vitesse de retour du paramètre critique au-dessous de sa limite fonctionnelle en cas de dépassement.
Conformément à l'invention, plusieurs contraintes peuvent être mises en place simultanément.
Dans ce mode particulier de mise en mode de l'invention, le module de contrôle prend en compte une pluralité de paramètres du système et choisit le facteur de contrôle de gain, comme étant la valeur minimale des $\alpha_i$, où $\alpha_i = f(\delta_i)$, $\delta_i$ étant la différence entre un paramètre $P_i$ et sa limite fonctionnelle ($LF_{Pi}$) et f une fonction affine saturée.
Dans un mode préféré de réalisation de l'invention, la différence entre le paramètre protégé et sa limite fonctionnelle n'est prise en compte que lorsque le résidu entre la consigne et sa valeur filtrée est positif (demande de croissance du point de fonctionnement), le gain de filtre n'étant pas pondéré lorsque le résidu est négatif (demande de décroissance du point de fonctionnement).
Cette caractéristique permet avantageusement de freiner le changement des points de fonctionnement lorsque le paramètre protégé se rapproche de sa limite fonctionnelle et d'appliquer une dynamique normale ($\alpha$ non appliqué) en cas de demande de décroissance de la consigne, autrement dit d'écartement par rapport à la limite fonctionnelle.
Dans un mode particulier de l'invention, le module de contrôle fixe le facteur de contrôle de gain à une constante sous détection d'au moins un évènement prédéterminé.
On peut ainsi court-circuiter ou inhiber la fonction de calcul du facteur de contrôle de gain, et ramener celui-ci à sa valeur initiale ou à une autre valeur prédéterminée.
Dans un mode particulier de mise en oeuvre de l'invention, le module de correction suit une loi de commande multivariable du type MIP (Modèle Interne Prédictif). Cette commande multi-variable permet d'avoir une marge de stabilité importante. Elle est par ailleurs très robuste dans le cas des systèmes à paramètre moyennement variant.
L'invention concerne également un moteur comportant deux pompes alimentant une chambre de combustion par deux ergols, le débit de chacun des ergols pouvant être régulé par une vanne, ce moteur comportant un dispositif de contrôle tel que mentionné ci-dessus, dans lequel :

- les variables V de fonctionnement sont une pression PC dans la chambre de combustion et un rapport RM des débits massiques des deux ergols en entrée de la chambre ;
- les consignes C sont une consigne $PC_c$ en pression dans la chambre de combustion et une consigne $RM_c$ en rapport des débits massiques des deux ergols en entrée de la chambre ;
- les paramètres P sont des vitesses de rotation des pompes ; et
- les commandes U sont des commandes de réglage de l'ouverture des vannes.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- Les figures 1A et 1B déjà décrites représentent des modules de filtrage de consignes connus de l'art antérieur ;

3

- la figure 2 représente, dans son environnement, un dispositif de contrôle conforme à l'invention dans un mode particulier de réalisation ;
- la figure 3 représente un exemple de profil du facteur $\alpha$ de contrôle de gain pouvant être utilisé dans un mode particulier de mise en oeuvre de l'invention ;
- la figure 4 représente un moteur conforme à l'invention dans un mode particulier de réalisation ; et
- les figures 5A et 5B illustrent l'intérêt de la mise en oeuvre de l'invention dans l'exemple du moteur de la figure 4.

Description détaillée d'un mode de réalisation

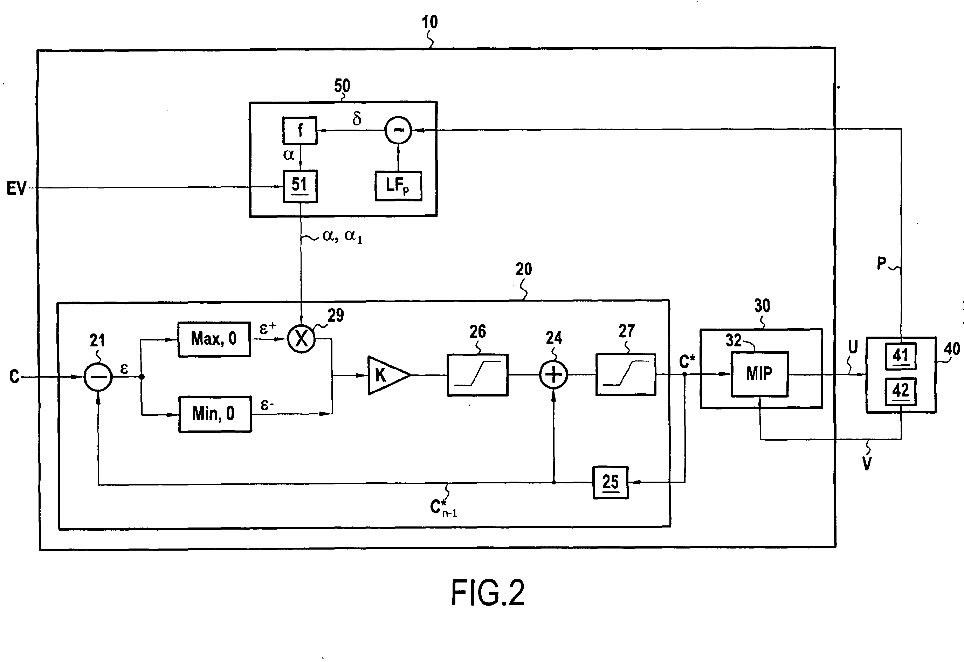

La **figure 2** représente un dispositif de contrôle conforme à l'invention dans un mode particulier de réalisation.

Dans l'exemple décrit ici, le dispositif 10 contrôle une variable V de fonctionnement d'un système régulé 40.

Nous supposerons que le dispositif de contrôle 10 reçoit en entrée une consigne C, cette consigne C étant filtrée par un module de filtrage 20, la consigne filtrée étant notée C*. La différence $\varepsilon$ entre la consigne C et sa valeur filtrée C* est ci-après appelée "résidu" :

$$\varepsilon = C - C^* \qquad (4)$$

La consigne filtrée C* est une entrée d'un module 30 de correction de la variable V du système régulé 40 par asservissement.

Ce module de correction 30 génère une commande U appliquée au système régulé 40. Comme dans l'art antérieur, le module de filtrage 20 comporte un soustracteur 21, un additionneur 24 et un retardateur 25. Dans l'exemple décrit ici, il comporte également deux saturateurs 26, 27 optionnels dont les effets sont identiques à ceux décrits en référence à la figure 1B.

Mais, conformément à l'invention, le gain K du module de filtrage 20 peut être pondéré en fonction du résidu $\varepsilon$ et d'un facteur de pondération $\alpha$, $\alpha_1$ de façon à garantir qu'un paramètre critique P du système régulé 40 respecte une limite fonctionnelle $LF_P$.

A cet effet, le dispositif de contrôle conforme à l'invention comporte un module 50 qui reçoit en entrée la valeur du paramètre P du système régulé 40.

Dans l'exemple de réalisation décrit ici, le module de contrôle 50 comporte un processeur 51 apte à déterminer si un évènement prédéterminé se produit.

Si c'est le cas, le processeur 51 fixe le facteur de pondération égal à une constante $\alpha_1$.

Au contraire, si aucun évènement prédéterminé n'est détecté, le processeur 51 génère un facteur $\alpha$ de contrôle de gain par une relation $\alpha = f(\delta)$ où $\delta$ est la différence entre la valeur du paramètre P et la limite fonctionnelle $LF_P$ de ce paramètre, cette limite $LF_P$ étant mémorisée dans le module de contrôle 50.

Un exemple de profil du facteur $\alpha$ sera décrit ultérieurement en référence à la figure 3.

Nous allons maintenant décrire en détail le calcul de la pondération du gain K du module de filtrage dans l'exemple de réalisation décrit ici.

Dans cet exemple, deux cas peuvent se produire en fonction du signe du résidu $\varepsilon$.

Lorsque le résidu est positif ($\varepsilon^+$), la consigne filtrée C* est obtenue, en sortie du multiplicateur 29, par l'équation (5) lorsque le module de contrôle 50 a détecté un évènement EV ou par l'équation (6) dans le cas contraire :

$$C^* = C^*_{n-1} + K \cdot \varepsilon^+ \cdot \alpha_l \qquad (5)$$

$$C^* = C^*_{n-1} + K \cdot \varepsilon^+ \cdot \alpha \qquad (6)$$

Dans l'exemple de réalisation décrit ici, lorsque le résidu $\varepsilon$ est négatif ($\varepsilon^-$) la pondération de gain n'est pas mise en oeuvre.

Dans ce cas, la consigne filtrée C* est obtenue par l'équation (7).

$$C^* = C^*_{n-1} + K \cdot \varepsilon^- \qquad (7)$$

Dans l'exemple de réalisation décrit ici, le module 30 de correction comporte des moyens 32 pour générer la commande U suivant une loi de commande du type Modèle Interne Prédictif, ce module 32 prenant en entrée d'une part la consigne filtrée C*, et d'autre part la variable V de fonctionnement du système 40.

Le système régulé 40 comporte deux ports 41, 42 permettant respectivement au module de contrôle 50 et au module de correction 30 d'obtenir la valeur du paramètre critique P à surveiller et la valeur de la variable V de fonctionnement de ce système.

A la **figure 3**, on a représenté un exemple de profil du facteur $\alpha$ de contrôle de gain utilisé pour pondérer le gain K* du module de filtrage 20, lorsque le résidu $\varepsilon$ est positif.

Ce facteur $\alpha$ est obtenu par une relation du type $\alpha = f(\delta)$, où $\delta$ est la différence entre le paramètre P et sa limite fonctionnelle $LF_P$ et f une fonction affine saturée.

Dans l'exemple décrit ici, on définit deux valeurs $\delta_{MIN}$ et $\delta_{MAX}$ telles que :

- Si $\delta$ est supérieur à $\delta_{MAX}$, alors $\alpha$ = 1 ; et
- Si $\delta$ est inférieur à $\delta_{MIN}$, alors $\alpha$ = -0,5.

Ce profil définit ainsi une plage de ralentissement de la dynamique de poursuite lorsque $\delta$ est compris entre $\delta_{MIN}$ et $\delta_{MAX}$ et deux phases d'évolutions rapides de ces dynamiques lorsque le paramètre P s'éloigne de sa limite de fonctionnement $LF_P$.

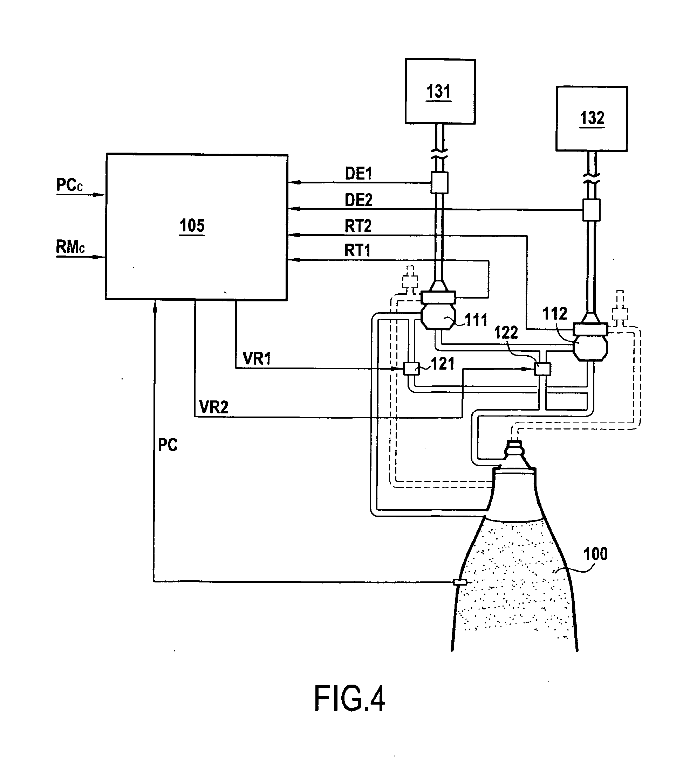

La **figure 4** représente un moteur conforme à l'invention.

Ce moteur comporte deux réservoirs d'ergol référencés 131 et 132, chacun en amont d'une pompe 111, 112. Le débit de chacun de ces ergols peut être régulé par une vanne 121, 122.

Dans le mode de réalisation décrit ici, ce moteur comporte un contrôleur 105 adapté à obtenir :

- une mesure du débit DE1 en ergol en amont de la pompe 111;
- une mesure du débit DE2 en ergol en amont de la pompe 112 ;
- les vitesses RT1 et RT2 de rotation des pompes 111, 112 et la pression PC dans la chambre de combustion 100.

Le contrôleur 105 est adapté à générer des commandes VR1 et VR2 de contrôle de l'ouverture de chacune des vannes 121, 122.

Dans cet exemple, le contrôleur 105 reçoit deux consignes, à savoir une consigne $PC_C$ en pression dans la chambre de combustion 100 et une consigne $RM_C$ en rapport des débits massiques des deux ergols en entrée de la chambre de combustion 100.

Le contrôleur 105 surveille donc en permanence la valeur des paramètres régulés, à savoir la pression PC dans la chambre de combustion 100 et le rapport RM entre les débits DE1 et DE2 en amont des pompes 111, 112.

Le contrôleur 105 constitue un dispositif de contrôleur au sens de l'invention dans lequel :

- les variables de fonctionnement sont la pression PC dans la chambre de combustion et le rapport RM des deux débits d'ergol ;
- les consignes sont la consigne $PC_C$ en pression dans la chambre de combustion et le rapport $RM_C$ des débits d'ergols en entrée de cette chambre ;
- les paramètres critiques surveillés sont les vitesses RT1 et RT2 de rotation de ces pompes, ces paramètres étant associés à des limites fonctionnelles mémorisées dans le contrôleur 105 ; et
- les commandes sont les commandes de réglage de l'ouverture des vannes 121 et 122.

Ainsi, l'invention permet de régler le positionnement des vannes 121 et 122 pour faire converger les variables régulées PC et RM vers le vecteur de consigne ($PC_C$ ; $RM_C$), cette régulation étant assujettie au respect de la limite fonctionnelle de rotation des pompes 111 et 112.

L'invention trouve un intérêt particulier lorsque certains organes internes du moteur se dégradent, cette dégradation entraînant un sur-régime des vitesses RT1 et RT2 de rotation des pompes.

Dans ce cas, l'invention permet de limiter la vitesse de rotation des pompes en-deçà de leurs limites fonctionnelles, quitte à ne pas respecter les consignes $PC_C$ en pression et $RM_C$ en rapport d'ergols.

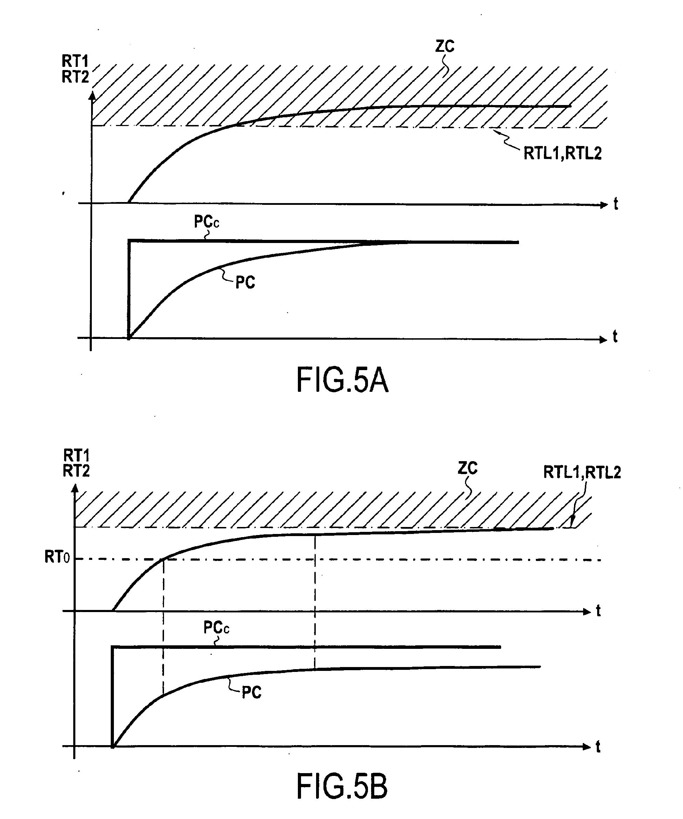

Les **figures 5A et 5B** illustrent l'intérêt de l'invention.

A la figure 5A, on a représenté le fonctionnement d'un moteur du type de celui de la figure 4, lorsque l'invention n'est pas mise en oeuvre.

Il apparaît, sur la partie inférieure de la partie 5A, que les variables régulées "pression dans la chambre (PC) et "rapport de débits d'ergols (RM)" continuent à tendre vers la consigne, même si les paramètres internes du moteur, à savoir les vitesses de rotation des pompes (RT1, RT2) dépassent leurs limites fonctionnelles RTL1, RTL2, et entrent dans une zone critique de fonctionnement ZC.

La figure 5B représente le fonctionnement du moteur de la figure 4.

Il apparaît sur la partie supérieure de la figure 5B que les vitesses de rotation des pompes 111, 112 n'atteignent jamais les limites de fonctionnement RTL1, RTL2.

Ceci est rendu possible par la régulation de la dynamique de poursuite du filtre de la consigne, cette consigne étant ralentie, ou freinée dès que la vitesse de rotation d'une pompe atteint une valeur $RT_o$ prédéterminée. L'homme du métier comprendra, en référence à la figure 3, que la valeur $RT_o$ vérifie l'équation (8) :

$$\delta_{MAX} = RTL1 - RT_o \quad (8)$$

On remarque, sur cette figure 5B, qu'il est choisit de privilégier la vitesse de rotation des pompes, plutôt que le respect de la consigne.

**Revendications**

1. Dispositif (10) de contrôle d'au moins une variable (V) de fonctionnement d'un système régulé (40), ce dispositif comportant:

    - un module (20) de filtrage d'au moins une consigne (C) fournie en entrée dudit dispositif de contrôle (10), ce module de filtrage (20) utilisant un intégrateur du premier ordre ; et
    - un module (30) de correction de ladite au moins une variable (V) par asservissement, ce module de correction (30) prenant en compte une mesure de ladite variable (V) et ladite au moins une consigne (C*) filtrée par ledit module de filtrage (20) pour générer au moins une commande (U) dudit système (40) ;
    ledit dispositif (10) étant **caractérisé en ce qu'**il comporte :
    - un module (50) de contrôle apte à générer un facteur ($\alpha$) de contrôle de gain à partir d'au moins un paramètre (P) dudit système (40) et d'une valeur ($LF_P$) de limite fonctionnelle associée à ce paramètre (P) ; et
    - des moyens pour pondérer le gain (K) dudit module de filtrage (20) en fonction dudit facteur ($\alpha$) et du résidu ($\varepsilon$) entre ladite consigne (C) et sa valeur filtrée (C*) par ledit module de filtrage (20).

2. Dispositif selon la revendication 1, **caractérisé en ce que** ledit module de contrôle (50) obtient ledit facteur ($\alpha$) par une relation du type $\alpha = f(\delta)$, où $\delta$ est la différence entre ledit paramètre (P) et ladite limite fonctionnelle ($LF_P$), et f une fonction affine saturée.

3. Dispositif selon la revendication 1, **caractérisé en ce que** ledit module de contrôle (50) prend au compte une pluralité de paramètres ($P_i$) dudit système (40) et **en ce que** ledit facteur ($\alpha$) est choisi comme étant la valeur minimale des $\alpha_i$, où $\alpha_i = f(\delta_i)$, $\delta_i$ étant la différence entre un paramètre $P_i$ et sa limite fonctionnelle ($LF_{Pi}$), et f une fonction affine saturée.

4. Dispositif selon l'une quelconque des revendications 1 à 3, **caractérisé en ce que** le gain (K) dudit module de filtrage (20) n'est pas pondéré lorsque ledit résidu ($\varepsilon$) est négatif ($\varepsilon^-$).

5. Dispositif selon l'une quelconque des revendications 1 à 4, **caractérisé en ce que** ledit module de contrôle (50) fixe ledit facteur ($\alpha$) à une constante ($\alpha_1$) sur détection d'au moins un événement (EV) prédéterminé.

6. Dispositif selon l'une quelconque des revendications 1 à 5, **caractérisé en ce que** ledit module de correction (30) suit une loi de commande multivariable du type Modèle Interne Prédictif.

7. Moteur comportant deux pompes (111, 112) alimentant une chambre de combustion (100) par deux ergols, le débit de chacun desdits ergols pouvant être régulé par une vanne (121, 122), **caractérisé en ce qu'**il comporte un dispositif de contrôle selon l'une quelconque des revendications 1 à 6, dans lequel :

    - lesdites variables (V) de fonctionnement sont une pression (PC) dans ladite chambre de combustion (100) et un rapport (RM) des débits massiques des deux ergols en entrée de ladite chambre (100) ;
    - lesdites consignes (C) sont une consigne ($PC_c$) en pression dans ladite chambre de combustion (100) et une consigne ($RM_c$) en rapport des débits massiques des deux ergols en entrée de ladite chambre (100) ;
    - lesdits paramètres (P) sont des vitesses (RT1, RT2) de rotation desdites pompes ; et
    - lesdites commandes (U) sont des commandes (VR1, VR2) de réglage de l'ouverture desdites vannes (121, 122).

**Claims**

1. A control device (10) for controlling at least one operating variable (V) of a regulated system (40), the device comprising:

   · a filter module (20) for filtering at least one order (C) input to said control device (10), the filter module (20) using a first order integrator; and
   · a correction module (30) for correcting said at least one variable (V) by servo-control, said correction module (30) taking account of a measurement of said variable (V) and of said at least one order (C*) as filtered by said filter module (20) in order to generate at least one command (U) for said system (40);
   wherein said device (10) includes:
   · a control module (50) suitable for generating a gain control factor ($\alpha$) on the basis of at least one parameter (P) of said system (40) and of an operating limit value ($LF_P$) associated with said parameter (P); and
   · weighting means for weighting the gain (K) of said filter module (20) as a function of said factor ($\alpha$) and of the residue ($\varepsilon$) between said order (C) and its value (C*) as filtered by said filter module (20).

2. A device according to claim 1, wherein said control module (50) obtains said factor ($\alpha$) by a relation of the type $\alpha = f(\delta)$, where $\delta$ is the difference between said parameter (P) and said operating limit ($LF_P$), and f is a saturated affine function.

3. A device according to claim 1, wherein said control module (50) takes account of a plurality of parameters ($P_i$) of said system (40), and wherein said factor ($\alpha$) is selected as being the minimum value of the values $\alpha_i$, where $\alpha_i = f(\delta_i)$, $\delta_i$ being the difference between a parameter $P_i$ and its operating limit ($LF_{Pi}$), and $\underline{f}$ is a saturated affine function.

4. A device according to any one of claims 1 to 3, wherein the gain (K) of said filter module (20) is not weighed when said residue ($\varepsilon$) is negative ($\varepsilon^-$).

5. A device according to any one of claim 1 to 4, wherein said control module (50) sets said factor ($\alpha$) to a constant ($\alpha_1$) on detecting at least one predetermined event (EV).

6. A device according to any one of claim 1 to 5, wherein said correction module (30) follows a multivariable command law of the Predictive Internal Model type.

7. An engine including two pumps (111, 112) feeding a combustion chamber (100) with two propellant components, the flow rate of each of said components being adjustable by means of respective valves (121, 122), the engine including a control device according to any one of claim 1 to 6, in which:

   said operating variables (V) are a pressure (PC) in said combustion chamber (100) and a ratio (RM) of the mass flow rates of the two propellant components delivered to said chamber (100);
   said orders (C) are a order ($PC_C$) for pressure in said combustion chamber (100), and a order ($RM_C$) for the ratio of the mass flow rates of the two components delivered to said chamber (100);
   said parameters (P) are speeds (RT1, RT2) of rotation of said pumps; and
   said commands (U) are commands (VR1, VR2) for adjusting the extent to which said valves (121, 122) are opened.

**Patentansprüche**

1. Vorrichtung (10) zur Kontrolle wenigstens einer Variablen (V) des Betriebs eines geregelten Systems (40), wobei diese Vorrichtung umfaßt:

   - ein Modul (20) zum Filtern wenigstens eines Sollwertes (C), der am Eingang der Kontrollvorrichtung (10) bereitgestellt wird, wobei dieses Filtermodul (20) einen Integrator erster Ordnung verwendet, und
   - ein Modul (30) zur Korrektur der wenigstens einen Variablen (V) durch Regelung, wobei dieses Korrekturmodul (30) eine Messung der Variablen (V) sowie den wenigstens einen durch das Filtermodul (20) gefilterten Sollwert (C*) berücksichtigt, um wenigstens einen Befehl (U) des Systems (40) zu generieren, wobei die Vorrichtung (10) **dadurch gekennzeichnet ist, daß** sie umfaßt:
   - ein Kontrollmodul (50), das geeignet ist, mittels wenigstens eines Parameters (P) des Systems (40) und eines diesem Parameter (P) zugeordneten Funktionsgrenzwertes (LF$_P$) einen Faktor ($\alpha$) zur Leistungskotrolle zu generieren, und
- Mittel zur Gewichtung der Leistung (K) des Filtermoduls (20) in Abhängigkeit des Faktors ($\alpha$) und des Residuums ($\varepsilon$) zwischen dem Sollwert (C) und seinem durch das Filtermodul (20) gefilterten Wert (C*).

2. Vorrichtung nach Anspruch 1, **dadurch gekennzeichnet, daß** das Kontrollmodul (50) den Faktor ($\alpha$) durch eine Beziehung vom Typ $\alpha = f(\delta)$ erhält, worin $\delta$ die Differenz zwischen dem Parameter (P) und dem Funktionsgrenzwert (LFp) und f eine gesättigte affine Funktion ist.

3. Vorrichtung nach Anspruch 1, **dadurch gekennzeichnet, daß** das Kontrollmodul (50) eine Vielzahl von Parametern (P$_i$) des Systems (40) berücksichtigt und daß der Faktor ($\alpha$) als der Mindestwert der $\alpha_i$ gewählt wird, worin $\alpha_i = f(\delta_i)$, wobei $\delta_i$ die Differenz zwischen einem Parameter P$_i$ und seinem Funktionsgrenzwert (LF$_{Pi}$) und f eine gesättigte affine Funktion ist.

4. Vorrichtung nach einem der Ansprüche 1 bis 3, **dadurch gekennzeichnet, daß** die Leistung (K) des Filtermoduls (20) nicht gewichtet wird, wenn das Residuum ($\varepsilon$) negativ ($\varepsilon^-$) ist.

5. Vorrichtung nach einem der Ansprüche 1 bis 4, **dadurch gekennzeichnet, daß** das Kontrollmodul (50) den Faktor ($\alpha$) auf eine Konstante ($\alpha_1$) bei Erfassung wenigstens eines vorbestimmten Ereignisses (EV) festlegt.

6. Vorrichtung nach einem der Ansprüche 1 bis 5, **dadurch gekennzeichnet, daß** das Korrekturmodul (30) einem multivariablen Regelungsgesetz vom Typ Internes Prognosemodell folgt.

7. Triebwerk mit zwei Pumpen (111, 1112), die eine Brennkammer (100) mit zwei Treibstoffen beaufschlagen, wobei der Durchsatz eines jeden Treibstoffs mittels eines Ventils (121, 122) geregelt werden kann, **dadurch gekennzeichnet, daß** es eine Kontrollvorrichtung nach einem der Ansprüche 1 bis 6 umfaßt, wobei:

- die Betriebsvariablen (V) ein Druck (PC) in der Brennkammer (100) und ein Verhältnis (RM) der Massendurchsätze der beiden Treibstoffe am Eingang der Kammer (100) sind,
- die Sollwerte (C) ein Sollwert (PC$_C$) des Druckes in der Brennkammer (100) und ein Sollwert (RM$_C$) des Verhältnisses der Massendurchsätze der beiden Treibstoffe am Eingang der Kammer (100) sind,
- die Parameter (P) Rotationsgeschwindigkeiten (RT1, RT2) der Pumpen sind und
- die Befehle (U) Befehle (VR1, VR2) zur Regelung des Öffnens der Ventile (121, 122) sind.

EP 2 098 922 B1

FIG.1A
ART ANTERIEUR

FIG.1B
ART ANTERIEUR

FIG.3

9

FIG.2

FIG.4

FIG.5A

FIG.5B

## RÉFÉRENCES CITÉES DANS LA DESCRIPTION

**Documents brevets cités dans la description**

- US 4280083 A